# EUROPÄISCHE PATENTSCHRIFT

(11) **EP 0 796 301 B1**
(45) Veröffentlichungstag und Bekanntmachung des Hinweises auf die Patenterteilung: **08.07.1998**
(21) Anmeldenummer: 95942077.9
(22) Anmeldetag: 07.12.1995
(51) Int. Cl.: C09J 131/04

(54) **HOLZLEIMPULVER**
WOOD GLUE POWDER
POUDRE DE COLLE A BOIS

(30) Priorität: 08.12.1994 DE 4443738
(43) Veröffentlichungstag der Anmeldung: 24.09.1997
(73) Patentinhaber: Wacker-Chemie GmbH, 81737 München (DE)
(72) Erfinder: SCHILLING, Bernd, D-84489 Burghausen (DE); FIGGE, Rainer, D-84539 Ampfing (DE); SELIG, Manfred, D-84489 Burghausen (DE)
(74) Vertreter: Schuderer, Michael
(86) Internationale Anmeldenummer: EP9504829
(87) Internationale Veröffentlichungsnummer: WO9617897

(56) Entgegenhaltungen:
- DE-A- 1 794 123
- GB-A- 1 251 102
- US-A- 2 850 468
- US-A- 3 163 618
- US-A- 3 700 611

## Beschreibung

Die Erfindung betrifft ein Holzleimpulver, Verfahren zu dessen Herstellung sowie dessen Verwendung.

Aus der EP-A 311873 (US-A 5087649) sind pulverförmige Mischungen von Stärke und Celluloseether, welche in Wasser dispergierbare oder in Wasser lösliche Vinylacetatpolymerisate oder Vinylalkoholpolymerisate enthalten, für die Anwendung als Tapetenkleister bekannt. Der Zusatz der redispergierbaren Polyvinylacetatpulver erfolgt dabei zur Verstärkung der Klebekraft. Mit dem beanspruchten Verfahren sind zwar Klebemittel zugänglich, welche für die Holzverklebung ausreichende Klebekraft aufweisen; an einen wasserfesten Holzklebstoff für den Innenbereich, insbesondere bei der Verwendung als Möbelklebstoff, werden aber heute noch weitere Anforderungskriterien gestellt, nämlich hohe Wärmestandfestigkeiten und schnelles Abbinden bein Preßvorgang um rasche Maschinenverklebungen durchführen zu können. Mit Leimpulvern auf der Basis von Vinylacetathomopolymerisaten und/oder wasserlöslichen, teilverseiften Polyvinylalkoholen werden diese Kriterien ungenügend erfüllt.

Die JP-A 61-168681 (Derwent-Abstract AN 86-241053) betrifft pulverförmige Holzklebemittel, die durch Sprühtrocknung von Polyvinylacetathomopolymer-Dispersionen zugänglich sind, welche in Gegenwart von teilverseiftem Polyvinylalkohol als Schutzkolloid polymerisiert wurden. Zur Verbesserung der Klebefestigkeit wird dem Pulver Melamin-Formaldehyd-Kondensat zugesetzt. Derartige Pulvermischungen bilden zwar wasserfeste Verklebungen, aufgrund des Zusatzes von feuchtigkeitsempfindlichem Vernetzer ist allerdings deren Lagerstabilität und Blockstabilität unbefriedigend. Darüberhinaus ist bei der Verwendung von Polyvinylacetat-Homopolymerisaten der Zusatz von Verfilmungshilfsmittel notwendig, um die für die Anwendung erforderliche niedrige Mindestverfilmungstemperatur von 0 bis 5°C zu erhalten.

Die DE-B 2214410 (US-A 3883489) und DE-B 2614261 (GB-A 1569637) betreffen Verfahren zur Herstellung redispergierbarer Vinylacetat/Ethylen-Dispersionspulver, welche durch Emulsionspolymerisation in Gegenwart von teilverseiftem Polyvinylalkohol als Schutzkolloid und nachfolgender Sprühtrocknung der Dispersion hergestellt werden. Die Pulver werden als geeignete Bindemittel für Klebstoffe und Anstrichmittel beschrieben. Aufgrund des Ethylengehalts im Polymer ist zwar der Zusatz von Verfilmungshilfsmitteln entbehrlich, die Pulver enthalten jedoch zur Verbesserung der Blockfestigkeit bis zu 30 Gew.% Antiblockmittel, was zur drastischen Verminderung der Klebefestigkeit führt. Darüberhinaus zeigen ethylenhaltige Vinylacetatcopolymere, welche zur Reduzierung der Mindestfilmbildungstemperatur einen relativ hohen Ethylenanteil haben, nur sehr niedere Wärmestandfestigkeiten.

Die DE-A 1794123 (ZA-A 6805680) beschreibt eine Klebstoffdispersion zur Verklebung von keramischen Materialien, welche Vinylacetathomopolymer und hochmolekularen, vollverseiften Polyvinylalkohol enthält. Zur Verbesserung der Klebeeigenschaften wird der Zusatz von Weichmachern, beispielsweise Dibutylphthalat, empfohlen. Nachteilig ist hierbei, daß bei der Verwendung von flüchtigen Weichmachern, dieser nach der Verarbeitung ausdampft. Bei Holzleimen, welche primär im Wohnbereich eingesetzt werden, ist die Emission flüchtiger Verbindungen zu vermeiden. Weiter sind diese Mischungen zwar sprühtrockenbar, die damit erhältlichen Pulver aber wegen der schlechten Wasserlöslichkeit der hochmolekularen, vollverseiften Polyvinylalkohole nicht redispergierbar. Die Verwendung als Holzleimpulver für die Herstellung von wäßrigen Holzklebemitteln ist damit ausgeschlossen.

Vor diesem Hintergrund bestand die Aufgabe, pulverförmige Klebemittel zur Verklebung von Holz zu entwickeln, deren Verwendung in wäßrigen Holzklebemitteln zu wasserfesten Verklebungen mit hoher Wärmefestigkeit und schnellem Abbindeverhalten führt.

Aufgrund der verstärkten Umweltanforderungen, insbesondere aus der sogenannten Verpackungsverordnung, sollte ein pulverförmiges Holzklebemittel zur Verfügung gestellt werden, welches in leicht entsorgbaren Papiersäcken, anstelle der Eimerverpackung von bisher verwendeten flüssigen Dispersionsklebstoffen, verpackt und transportiert werden kann und vor der Applikation nur mehr mit Wasser angerührt werden muß. Für einen Transport von palletierter Sackware sind aber an Holzleimpulver hohe Anforderungen an die Blockstabilität zu stellen, insbesonders für den Expor= in Länder mit heißem Klima. Eine weitere Aufgabe bestand daher darin, pulverförmige Klebemittel zur Verfügung zu stellen, die hohe Blockfestigkeit bei geringem oder keinem Anteil an Antiblockmittel aufweisen und welche hervorragende Redispergierbarkeit in Wasser zeigen.

Ein Grund warum bisher Holzleimpulver zur Herstellung von wasserfesten Verklebungen keine Verwendung gefunden haben liegt darin, daß zur Erzielung von hohen Klebefestigkeiten bei niederen Temperaturen den aus Pulvern hergestellten Dispersionsklebstoffen auf Polyvinylacetatbasis flüchtige Verfilmungshilfsmittel zugesetzt werden mußten. Eine zusätzliche Aufgabe bestand daher darin, Holzleimpulver zur Verfügung zu stellen, welche bei Verwendung in wäßrigen Klebemitteldispersionen auch ohne Zusatz von flüchtigen Verfilmungshilfsmitteln die erforderliche niedrige Mindestverfilmungstemperatur aufweisen.

Gegenstand der Erfindung sind in Wasser redispergierbare, blockfeste Holzleimpulver mit einer Mindestverfilmungstemperatur von 0 bis 5°C enthaltend,
a) 70 bis 90 Gew.% ein oder mehrere Vinylester-Homopolymerisate oder Vinylester-Copolymerisate von Vinylestern von unverzweigten oder verzweigten Alkylcarbonsäuren mit 1 bis 18 C-Atomen und
b) 10 bis 30 Gew.% ein oder mehrere vollverseifte Vinylalkohol-Homopolymerisate oder Vinylalkohol-Copolymerisate mit einem Hydrolysegrad von 96 bis 100 Mol% und einer Höppler-Viskosität von 2 bis 15 mPa.s, gemessen in 4 %-iger wäßriger Lösung, jeweils bezogen auf das Gesamtgewicht der polymeren Bestandteile a) und b),
erhältlich durch Mischen von, nach dem Emulsionspolymerisationsverfahren hergestellten, wäßrigen Dispersionen der Vinylesterpolymerisate a) mit den Vinylalkoholpolymerisaten b) und gegebenenfalls weiteren Zusatzstoffen und anschließender Sprühtrocknung des Gemisches.

Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit bis zu 10 C-Atomen, beispielsweise VeoVa9^{R} oder VeoVa10^{R}. Besonders bevorzugt ist Vinylacetat.

Die Vinylester-Copolymerisate können gegebenenfalls 1.0 bis 65 Gew.%, bezogen auf das Gesamtgewicht des Copolymerisats, Vinylaromaten wie Styrol und/oder Vinylhalogenide wie Vinylchlorid und/oder Acrylsäureester bzw. Methacrylsäureester von Alkoholen mit 1 bis 10 C-Atomen, wie Methylacrylat, Methylmethacrylat, Ethylacrylat, Ethylmethacrylat, Propylacrylat, Propylmethacrylat, n-Butylacrylat, t-Butylacrylat, n-Butylmethacrylat, t-Butylmethacrylat, 2-Ethylhexylacrylat und/oder ethylenisch ungesättigte Dicarbonsäureester bzw. deren Derivate wie Diisopropylfumarat, die Dimethyl-, Methyl-t-butyl-, Di-n-butyl-, Di-t-Butyl- und Diethylester der Maleinsäure bzw. Fumarsäure, oder Maleinsäureanhydrid enthalten. Gegebenenfalls können 1 bis 10 Gew.% α-Olefine wie Ethylen enthalten sein. Bevorzugt werden Copolymerisate mit Comonomeren, welche die Härte des Polymerisats erhöhen, d.h. zu Copolymerisaten mit höherer Tg führen. Beispiele hierfür sind VeoVa9^{R} und Vinylchlorid. Der Gehalt an Comonomeren, welche die Härte der Vinylester-Copolymerisate vermindern, beispielsweise Ethylen, n-Butylacrylat, sollte vorzugsweise maximal 10 Gew.%, bezogen auf das Gesamtgewicht des Copolymerisats, betragen.

Gegebenenfalls enthalten die Vinylester-Homo- oder Copolymerisate noch 0.05 bis 10.0 Gew.%, bezogen auf das Gesamtgewicht des Comonomergemisches, Hilfsmonomere aus der Gruppe der ethylenisch ungesättigten Carbonsäuren, vorzugsweise Acrylsäure oder Methacrylsäure; aus der Gruppe der ethylenisch ungesättigten Carbonsäureamide, vorzugsweise Acrylamid; aus der Gruppe der ethylenisch ungesättigten Sulfonsäuren bzw. deren Salze, vorzugsweise Vinylsulfonsäure, 2-Acrylamido-2-methyl-propansulfonsäure; und/oder aus der Gruppe der mehrfach ethylenisch ungesättigten Comonomeren, beispielsweise Divinyladipat, Diallylmaleat, Allylmethacrylat oder Triallylcyanurat. Als Hilfsmonomere geeignet sind auch vernetzend wirkende Comonomere, beispielsweise Acrylamidoglykolsäure (AGA), Methylacrylamidoglykolsäuremethylester (MAGME), N-Methylolacrylamid (NMAA, N-Methylolmethacrylamid, N-Methylolallylcarbamat, Alkylether, wie der Isobutoxyether, oder Ester des N-Methylolacrylamids, des N-Methylolmethacrylamids oder des N-Methylolallylcarbamats.

Bevorzugte Polymerisate a) sind Vinylacetat-Homopolymerisate, Vinylacetat-Ethylen-Copolymerisate mit einem Ethylengehalt von 1 bis 10 Gew.%; Vinylacetat-Copolymerisate mit Vinylestern von C₃- bis C₁₀-Alkylcarbonsäuren und einem Vinylacetat-Gehalt von 35 bis 90 Gew.%, beispielsweise Vinylacetat-VeoVa9^{R}-, Vinylacetat-VeoVa10^{R}-, Vinylacetat-Vinyllaurat-VeoVa9^{R}(VeoVa10^{R})-Copolymerisate. Bevorzugt sind auch Vinylacetat-Homopolymerisate und Vinylacetat-Copolymerisate der eben beschriebenen Zusammensetzungen, welche noch 0.05 bis 5.0 Gew.% N-Methylolacrylamid, N-Methylolmethacrylamid oder deren N-Alkoxymethyl-Derivate wie N-(isobutoxymethyl)(meth)acrylamid oder N-(n-butoxymethyl)-(meth)acrylamid enthalten. Die Angaben in Gew.% beziehen sich dabei jeweils auf das Gesamtgewicht der Polymerisate.

Die Herstellung der Vinylester-Homo- oder -Copolymerisate erfolgt nach dem Emulsionspolymerisationsverfahren. Die Polymerisation kann diskontinuierlich oder kontinuierlich, mit oder ohne Verwendung von Saatlatices, unter Vorlage aller oder einzelner Bestandteile des Reaktionsgemisches, oder unter teilweiser Vorlage und Nachdosierung der oder einzelner Bestandteile des Reaktionsgemisches, oder nach dem, Dosierverfahren ohne Vorlage durchgeführt werden. Alle Dosierungen erfolgen vorzugsweise im Maße des Verbrauchs der jeweiligen Komponente. Bei der Copolymerisation mit Ethylen wird vorzugsweise bei einem Druck von 20 bis 40 bar abs. gearbeitet.

Die polymerisation wird vorzugsweise in einem Temperaturbereich von 40°C bis 80°C durchgeführt und mit den für die Emulsionspolymerisation üblicherweise eingesetzten Methoden eingeleitet. Die Initiierung erfolgt mittels der üblichen wasserlöslichen Radikalbildner, die vorzugsweise in Mengen von 0.01 bis 1.0 Gew.%, bezogen auf das Gesamtgewicht der Monomeren, eingesetzt werden. Beispiele hierfür sind Ammonium- und Kaliumpersulfat, Alkylhydroperoxide, wie tert.-Butylhydroperoxid; Wasserstoffperoxid. Gegebenenfalls können die genannten radikalischen Initiatoren auch in bekannter Weise mit 0.01 bis 0.5 Gew.%, bezogen auf das Gesamtgewicht der Monomeren, Reduktionsmittel kombiniert werden. Geeignet sind zum Beispiel Formaldehydsulfoxylat-Salze, Natriumbisulfit oder Ascorbinsäure. Bei der Redoxinitiierung werden dabei vorzugsweise eine oder beide Redox-Katalysatorkomponenten während der Polymerisation dosiert.

Als Dispergiermittel können alle üblicherweise bei der Emulsionspolymerisation verwendeten Emulgatoren eingesetzt werden. Vorzugsweise werden 1 bis 4 Gew.%, bezogen auf das Gesamtgewicht der Monomeren, an Emulgator eingesetzt. Geeignet sind beispielsweise anionische Tenside, wie Alkylsulfate mit einer Kettenlänge von 8 bis 18 C-Atomen, Alkyl- und Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen. Geeignete nichtionische Tenside sind beispielsweise Alkylpolyalykolether oder Alkylarylpolyglykolether mit 8 bis 40 Ethylenoxideinheiten.

Gegebenenfalls können Schutzkolloide, vorzugsweise in Mengen von bis zu 4 Gew.%, bezogen auf das Gesamtgewicht der Monomeren, eingesetzt werden. Beispiele hierfür sind Vinylalkohol/Vinylacetat-Copolymere mit einem Gehalt von 70 bis 85 Mol% Vinylalkoholeinheiten, Polyvinylpyrrolidone mit einem Molekulargewicht von 5000 bis 400000, Hydroxyethylcellulosen mit einem Substitutionsgradbereich von 1.5 bis 3.

Der für die Polymerisation gewünschte pH-Bereich, der im allgemeinen zwischen 3 und 7 liegt, kann in bekannter Weise durch Säuren, Basen oder übliche Puffersalze, wie Alkaliphosphate oder Alkalicarbonate, eingestellt werden. Zur Molekulargewichtseinstellung können bei der Polymerisation die üblicherweise verwendeten Regler, zum Beispiel Mercaptane, Aldehyde und Chlorkohlenwasserstoffe, zugesetzt werden.

Der Feststoffgehalt der wäßrigen Dispersionen beträgt vorzugsweise 30 bis 65 Gew.%.

Geeignete vollverseifte Vinylalkohol-Homo- oder Copolymerisate sind solche mit einem Hydrolysegrad von 96 bis 100 Mol% und einer Höppler-Viskosität von 2 bis 15 mPa.s, gemessen in 4 %-iger wäßriger Lösung. Bevorzugt werden Vinylalkohol-Homopolymerisate oder Vinylalkohol-Copolymerisate, jeweils mit einem Hydrolysegrad von 98 bis 100 Mol% und einer Höppler-Viskosität von 2 bis 10 mPa.s, gemessen in 4 %-iger wäßriger Lösung bei 20°C.

Bevorzugte Vinylalkohol-Copolymerisate sind solche, welche neben Vinylalkohol-Einheiten noch 0.5 bis 10 Gew.%, vorzugsweise 1 bis 5 Gew.%, jeweils bezogen auf das Gesamtgewicht des copolymerisats, 1-Methylvinylalkohol-Einheiten enthalten. Am meisten bevorzugt sind Vinylalkohol/1-Methylvinylalkohol-Copolymerisate mit einem Hydrolysegrad von 98 bis 100 Mol%.

Die genannten Vinylalkohol-Homo und -Copolymerisate sind im Handel erhältlich bzw., in dem Fachmann bekannter Art und Weise, durch Hydrolyse oder Alkoholyse der entsprechenden Vinylacetat-Homc- und -Copolymerisate zugänglich.

Zur Herstellung der in Wasser redispergierbaren, blockfesten Holzleimpulver wird das Vinylesterpolymerisat als wäßrige Dispersion mit einem Festgehalt von vorzugsweise 30 bis 60 Gew.% eingesetzt. Dieser Dispersion wird das Vinylalkoholpolymerisat b) als Feststoff oder als wäßrige Lösung zugemischt. Bevorzugt wird die Zumischung als wäßrige Lösung, wobei der Festgehalt der Lösung bei nieder-viskosen (2 bis 6 mPa·s) Polyvinylalkoholen vorzugsweise bis zu 20 Gew.%, bei höher-viskosen (6 bis 15 mPa·s) Polyvinylalkoholen vorzugsweise bis zu 10 Gew.% beträgt. Gegebenenfalls kann zur Einstellung der Viskosität noch Wasser zugegeben werden. Diese Mischvorgänge können in beliebiger Reihenfolge unter Verwendung der gebräuchlichen Rührwerke ablaufen. Das Mischungsverhältnis wird so gewählt, daß im trockenen Pulver 70 bis 90 Gew.%, vorzugsweise 80 bis 85 Gew.% Vinylesterpolymerisat a) und 10 bis 30 Gew.%, vorzugsweise 15 bis 20 Gew.% Vinylalkoholpolymerisat b) vorliegen, jeweils bezogen auf das Gesamtgewicht der polymeren Bestandteile a) und b).

Die Mischung wird anschließend sprühgetrocknet, wobei das Versprühen mit Einstoffdüsen, Mehrstoffdüsen oder mit der Scheibe in einem gegebenenfalls erhitzten Trockengasstrom durchgeführt werden kann. Im allgemeinen werden Temperaturen über 250°C nicht angewendet. Die optimale Temperatur des Trockengases kann in wenigen Versuchen ermittelt werden; oft haben sich Temperaturen über 60°C besonders bewährt.

Vor, währen oder nach der Sprühtrocknung können dem Pulver gegebenenfalls noch Zusatzstoffen, beispielsweise Antiblockmittel oder Härter, zugegeben werden.

Zur Erhöhung der Lagerfähigkeit kann das erhaltene Pulver mit einem Antiblockmittel (Antibackmittel), in einer Menge von maximal 40 Gew.%, vorzugsweise maximal 5 Gew.%, bezogen auf das Gesamtgewicht polymerer Bestandteile, versetzt werden. Beispiele für Antiblockmittel sind fein gemahlene Aluminiumsilikate, Kieselgur, kolloidales Silicagel, pyrogene Kieselsäure, Fällungskieselsäure, Micro-Silica, Leichtspat, Kaolin, Talkum, Zemente, Diatomeenerde, Calciumcarbonat oder Magnesiumhydrosilikat. Bevorzugt werden Füllstoffe mit neutralem bis leichte saurem Charakter, beispielsweise Leichtspat.

Antiblockmittel werden im allgemeinen nur dann eingesetzt, wenn geringere Ansprüche bezüglich Klebefestigkeit und Optik an das Klebemittel gestellt werden. Ein Beispiel dafür ist der Einsatz des Holzleimpulvers in Klebemitteldispersionen zur Verklebung von Parkettböden. Bevorzugt werden aber Holzleimpulver ohne Antiblockmittel, da der Antiblockmittelzusatz bei der Anwendung des Klebemittels zur, für das Auge sichtbaren, Trübung der Klebefuge führt.

Für spezielle Anwendungen, beispielsweise falls hohe Heißwasserbeständigkeit der Verklebung gefordert wird (Beanspruchungsgruppe D3 und D4 der DIN-Norm EN 204), können dem Holzleimpulver noch Härter oder Vernetzungsmittel zugegeben werden. Beispiele für Härter sind saure Metallsalzhärter wie AlCl₃, FeCl₃, Cr(NO₃)₃. Beispiele für Vernetzungsmittel sind polyisocyanate oder Formaldehyd-Harnstoff-Harze und Formaldehyd-Phenol-Harze. Am meisten bevorzugt sind aber Ausführungsformen, bei denen dem Pulver weder Antiblockmittel, noch Härter oder Vernetzungsmittel, noch Verfilmungshilfsmittel oder Verdickungsmittel zugesetzt werden.

Mit aer vorliegenden Erfindung wird ein vollkonfektioniertes Holzleimpulver zur Verfügung gestellt welches vor der Applikation nur mehr mit Wasser angerührt werden muß. Zur Herstellung der wäßrigen Klebemittel-Dispersion wird das Holzleimpulver in Wasser redispergiert. Üblicherweise wird ein Festgehalt von 45 bis 55 Gew.% eingestellt. Bei der Abmischung der wäßrigen Klebemittel-Dispersion können gegebenenfalls auch noch weitere Zusatzstoffe wie Antiblockmittel zugegeben werden. Im Gegensatz zum Stand der Technik, bei dem wäßrige Klebemitteldispersionen mit, auf das jeweilige Anwendungsgebiet, speziell abgestimmter Viskosität verwendet wurden, können bei der Anwendung des erfindungsgemäßen Holzleimpulvers in wäßrigen Klebemitteldispersionen über die zugegebene Wassermenge beliebige Viskositäten eingestellt werden. Bevorzugt werden wäßrige Klebemitteldispersionen auf Basis des Holzleimpulvers mit einer Brookfield-Viskosität (20 Upm) von 10000 bis 50000 mPa·s verwendet.

Die mit dem Holzleimpulver hergestellten Klebemitteldispersionen eignen sich vor allem zur Holz-Holz-Verklebung von nichttragenden Holzbauteilen und erfüllen dabei die Beanspruchungsklasse "D2" der Europäischen Norm EN 204. Ein weiteres Anwendungsgebiet ist die Holzverklebung mit saugfähigen Substraten wie Estrich, speziell die Parkettverklebung. Die Auftragung des wäßrigen Klebemittels auf die zu verklebenden Substrate und deren Verklebung, gegebenenfalls unter Druckanwendung, erfolgt in der für den Fachmann bekannten Art und Weise und bedarf keiner näheren Beschreibung.

Gegenüber bisher bekannten Holzklebemitteln weist das erfindungsgemäße Holzleimpulver folgende Vorteile auf:

Im Vergleich zu herkömmlichen Holzklebemitteln auf der Basis von wäßrigen Dispersionen ist das erfindungsgemäße Holzleimpulver wegen des fehlenden Wasser-Anteils wesentlich leichter zu transportieren und zu verpacken. Im Gegensatz zu wäßrigen Holzleimen ist der Zusatz von Konservierungsmittel nicht erforderlich. Die Lagerstabilität ist wesentlich verbessert, da weder die Koagulation des Bindemittels bei niederer Temperatur, noch vorzeitige Vernetzung bei Verwendung von N-Methylolfunktionellen Vinylester-Polymerisaten zu befürchten ist.

Vor allem aber werden bei der Verwendung des erfindungsgemäßen Holzleimpulvers in wäßriger Dispersion erstmals Klebemittel auf Polyvinylacetat/Polyvinylalkohol-Basis zur Verfügung gestellt, welche einen hohen Feststoffgehalt von 50 % und mehr aufweisen, mit einem Anteil von bis zu 30 Gew% an vollverseiftem Polyvinylalkohol. Derartig hochkonzentrierte Polyvinylacetat/Polyvinylalkohol-Dispersionen waren bisher durch Abmischen von hoch feststoffreichen Polyvinylacetat-Dispersionen mit hochkonzentrierten wäßrigen Lösungen von vollverseiftem Polyvinylalkohol nicht zugänglich, da wäßrige Lösungen von vollverseiftem Polyvinylalkohol, aufgrund dessen schlechter Löslichkeit, nur bis zu einer Konzentration von maximal 20 % im technischen Maßstab handhabbar sind.

Bedingt durch den hohen Anteil an vollverseiftem, niederviskosem Polyvinylalkohol oder Vinylalkohol-Copolymerisat erhält man redispergierbare Klebstoffpulver, welche auch ohne Zusatz von Antiblockmittel die erforderliche Blockfestigkeit aufweisen. Dies hat zur Folge, daß die Klebefestigkeit der erfindungsgemäßen Holzleimpulver im Vergleich zu herkömmlichen, Antiblockmittel enthaltenden, pulverförmigen Klebemittel deutlich verbessert wird.

Aufgrund des hohen Anteils an vollverseiftem, niederviskosem Polyvinylalkohol oder Vinylalkohol-Copolymerisat wird die Mindestverfilmungstemperatur des Klebemittels auch ohne Zusatz von flüchtigen organischen Verfilmungshilfsmittel auf den in der Praxis erforderlichen Temperaturbereich von 0 bis 5°C abgesenkt. Das erfindungsgemäße Holzleimpulver stellt damit eine Problemlösung für die Vermeidung von flüchtigen organischen Verfilmungshilfsmitteln bei der Anwendung von wäßrigen Vinylacetathomopolymer-Klebemitteln dar und bietet durch den Sprühtrocknungsschritt auch die Möglichkeit andere flüchtige organischen Verbindungen wie Formaldehyd und Restmonomer an das technologisch machbare Limit zu bringen.

Die nachfolgenden Beispiele dienen zur weiteren Erläuterung der Erfindung:

### Herstellung der Holzleimpulver:

### Beispiel 1:

10 kg einer wäßrigen Vinylacetathomopolymer-Dispersion mit einem Festgehalt von 60 Gew.% wurden gründlich vermischt mit 10 kg einer 20 %-igen wäßrigen Lösung eines Vinylalkohol-Copolymerisats, hergestellt aus 97.5 Gew.% Vinylacetat und 2.5 Gew.% Isopropenylacetat und anschließender Hydrolyse, mit einem Hydrolysegrad von 98.5 % und einer Höppler-Viskosität des Vinylalkohol-Copolymerisats von 4 mPa·s. Die Mischung wurde durch eine Zweistoffdüse versprüht. Als Verdüsungskomponente diente auf 4 bar vorgepreßte Luft; die gebildeten Tropfen wurden mit auf 125°C erhitzter Luft im Gleichstrom getrocknet. Es wurde ein Pulver erhalten mit 75 Gew.% Polyvinylacetat und 25 Gew.% Vinylalkoholcopolymerisat. Die MFT des Pulvers betrug 0°C.

### Beispiel 2:

Es wurde analog Beispiel 1 vorgegangen, wobei als Polyvinylester-Komponente a) 10 kg einer wäßrigen Vinylacetatcopolymer-Dispersion mit 96 Gew.% Vinylacetat-Einheiten und 4.0 Gew.% N-Methylolacrylamid-Einheiten, und mit einem Festgehalt von 52 Gew.% eingesetzt wurden. Es wurde ein Pulver erhalten mit 72 Gew.% VAc/NMA-Copolymer und 28 Gew.% Vinylalkoholcopolymer. Die MFT des Pulvers betrug 2°C.

### Beispiel 3:

Es wurde analog Beispiel 1 vorgegangen, wobei als Polyvinylester-Komponente a) 10 kg einer wäßrigen Vinylacetatcopolymer-Dispersion mit 65 Gew.% Vinylacetat-Einheiten 30 Gew.% VeoVa9^{R}-Einheiten und 5.0 Gew.% N-Methylolacrylamid-Einheiten und mit einem Festgehalt von 50 Gew.% eingesetzt wurden. Es wurde ein Pulver erhalten mit 71 Gew.% VAc/VeoVa9/NMA-Copolymer und 29 Gew.% Vinylalkoholcopolymer. Die MFT des Pulvers betrug 2°C.

### Beispiel 4:

Es wurde analog Beispiel 1 vorgegangen, wobei als Polyvinylalkohol-Komponente b) 10 kg einer 20 %-igen wäßrigen Lösung eines Polyvinylalkohols mit einem Hydrolysegrad von 98.0 % und einer Höppler-Viskosität von 3 mPa·s. eingesetzt wurde. Es wurde ein Pulver erhalten mit 75 Gew.% Polyvinylacetat und 25 Gew.% Polyvinylalkohol. Die MFT des Pulvers betrug 0°C.

### Beispiel 5:

Es wurde analog Beispiel 4 vorgegangen, wobei nach der Trocknung des Pulvers noch 1.2 kg eines handelsüblichen Antiblockmittels (Leichtspat) zugegeben wurden. Es resultierte ein Pulver mit 6 kg Vinylacetathomopolymerisat, 2 kg vollverseiftem Polyvinylalkohol und 1.2 kg Antiblockmittel. Die MFT des Pulvers betrug 4°C.

### Vergleichsbeispiel 1:

Eine Vinylacetathomopolymerdispersion mit einem Festgehalt von 50 Gew.%, welche in Gegenwart von teilverseiftem Polyvinylalkohol in Emulsionspolymerisation hergestellt wurde, mit einem Polyvinylacetat-Gehalt von 90 Gew.% und 10 Gew.% Polyvinylalkohol mit einem Hydrolysegrad von 85 % und einer Höppler-Viskosität von 20 mPa·s, wurde analog der Verfahrensweise von Beispiel 1 getrocknet. Es wurde ein redispergierbares Pulver mit einer MFT von 18°C erhalten.

### Anwendungstechnische Prüfung:

Die Pulver aus Beispiel 1 und Vergleichsbeispiel 1 wurden in Wasser redispergiert und es wurden jeweils Klebemitteldispersionen mit einem Festgehalt von 50 Gew.% hergestellt.

Mit den Klebemitteldispersionen wurden die Klebefestigkeit gemäß DIN EN 204/205 und die Wärmefestigkeit der Verklebungen nach WATT 91 bestimmt, sowie das Abbindeverhalten geprüft.

### Prüfmethoden:

### Klebefestigkeit nach DIN EN 204/205:

Die Probekörper wurden gemäß DIN EN 205 hergestellt. Hierzu wurden jeweils zwei je 5 mm dicke, 130 mm, breite und 600 mm lange Buchenholzplatten mit der zu testenden Klebemittel-Dispersion unter gleichmäßig über die Klebefläche verteiltem Druck miteinander verklebt und gemäß DIN EN 204 gelagert. Für die Prüfung zur Zuordnung in die Beanspruchungsgruppe D1 wurden die Probekörper nach der Verleimung 7 Tage bei Normalklima (23°C, 65 % Luftfeuchtigkeit) gelagert.
Für die Prüfung zur Zuordnung in die Beanspruchungsgruppe D2 wurden die Probekörper nach der Verleimung 7 Tage bei Normalklima (23°C, 65 % Luftfeuchtigkeit), anschließend 3 Stunden in 23°C kaltem Wasser und schließlich weitere 7 Tage in Normalklima gelagert.
Für die Prüfung zur Zuordnung in die Beanspruchungsgruppe D3 wurden die Probekörper nach, der Verleimung 7 Tage bei Normalklima (23°C, 65 % Luftfeuchtigkeit) und anschließend 4 Tage in 23°C kaltem Wasser gelagert.
Nach der Lagerung wurde die verklebten Platten in jeweils 150 mm lange Prüfkörper aufgeteilt und mit diesen Prüfkörpern die Klebefestigkeit im Zug-Scher-Versuch ermittelt, wobei mit einer Zugprüfmaschine mit 50 mm/min Abzugsgeschwindigkeit die verklebten Prüfkörper auseinandergezogen und bis zum Bruch belastet wurden. Beim Bruch wurde die dabei auftretende Maximalkraft F_{Max} ermittelt. Die Klebefestigkeit T errechnet sich gemäß DIN EN 205 aus T = F_{Max}/A, wobei A die geklebte Prüffläche in mm² ist.
Die Ergebnisse der Prüfung der Klebefestigkeit sind in Tabelle 1 zusammengefaßt.

### Prüfung der Wärmefestigkeit nach WATT 91:

Als Probekörper wurden jeweils zwei je 5 mm dicke, 125 mm breite und 325 mm lange Buchenholzplatten mit der zu testenden Klebemittel-Dispersion unter gleichmäßig über die Klebefläche verteiltem Druck miteinander verklebt. Nach Herstellung der Probekörper wurden aiese in einem auf 80°C vorgeheizten Wärmeschrank bei einer Temperatur von 80°C gelagert. Unmittelbar nach der Wärmelagerung, wurde die Wärmefestigkeit im Zug-Scher-Versuch analog DIN EN 205 ermittelt, wobei mit einer Zugprüfmaschine mit 50 mm/min Abzugsgeschwindigkeit die verklebten Prüfkörper auseinandergezogen und bis zum Bruch belastet wurden. Beim Bruch wurde die dabei auftretende Maximalkraft F_{Max} ermittelt. Die Wärmefestigkeit τ errechnet sich aus τ = F_{Max}/A, wobei A die geklebte Prüffläche in mm² ist.
Die Ergebnisse der Prüfung der Wärmefestigkeit sind in Tabelle 1 zusammengefaßt.

### Prüfung des Abbindeverhaltens:

Analog der Vorgehensweise zur Prüfung der Klebefestigkeit wurden jeweils zwei je 5 mm dicke, 130 mm breite und 150 mm lange Eichenholzplatten mit der zu testenden Klebemittel-Dispersion unter gleichmäßig über die Klebefläche verteilem Druck miteinander verklebt und die Klebefestigkeit im Zug-Scher-Versuch nach einer Abbindezeit von 2.5 Minuten, 5 Minuten, 10 Minuten und 20 Minuten ermittelt, wobei mit einer Zugprüfmaschine mit 50 mm/min Abzugsgeschwindigkeit die verklebten Prüfkörper auseinandergezogen und bis zum Bruch belastet wurden. Beim Bruch wurde die dabei auftretende Maximalkraft F_{Max} ermittelt und daraus die Klebefestigkeit bei der Abbindezeit t mit Tₜ = F_{Max}/A, wobei A die geklebte Prüffläche in mm² ist.
Die Ergebnisse der Prüfung der Wärmefestigkeit sind in Tabelle 1 zusammengefaßt.

**Tabelle 1:**

| Beispiel | Beispiel 1 | Vergl.beispiel 1 |
|---|---|---|
| Klebefestigkeit (N/mm²): | | |
| D1-Wert | 10.3 | 8.0 |
| D2-Wert | 10.3 | 8.1 |
| D3-Wert | 0.5 | 0.0 |

| Wärmefestigkeit (N/mm²) : | | |
|---|---|---|
| τ | 9.2 | 4.8 |

| Abbindeverhalten (N/mm²): | | |
|---|---|---|
| Tₜ bei 2.5 Minuten | 3.6 | 2.2 |
| Tₜ bei 5 Minuten | 6.2 | 4.4 |
| Tₜ bei 10 Minuten | 8.5 | 6.5 |
| Tₜ bei 20 Minuten | 9.2 | 7.9 |

## Patentansprüche

1. In Wasser redispergierbare, blockfeste Holzleimpulver mit einer Mindestverfilmungstemperatur von 0 bis 5°C enthaltend,
a) 70 bis 90 Gew.% ein oder mehrere Vinylester-Homopolymerisate oder Vinylester-Copolymerisate von Vinylestern von unverzweigten oder verzweigten Alkylcarbonsäuren mit 1 bis 18 C-Atomen und
b) 10 bis 30 Gew.% ein oder mehrere vollverseifte Vinylalkohol-Homopolymerisate oder Vinylalkohol-Copolymerisate mit einem Hydrolysegrad von 96 bis 100 Mol% und einer Höppler-Viskosität von 2 bis 15 mPa.s, gemessen in 4 %-iger wäßriger Lösung, jeweils bezogen auf das Gesamtgewicht der polymeren Bestandteile a) und b),
erhältlich durch Mischen von, nach dem Emulsionspolymerisationsverfahren hergestellten, wäßrigen Dispersionen der Vinylesterpolymerisate a) mit den Vinylalkoholpolymerisaten b) und gegebenenfalls weiteren Zusatzstoffen und anschließender Sprühtrocknung des Gemisches.

2. Holzleimpulver nach Anspruch 1, dadurch gekennzeichnet, daß als Polymerisat a) Vinylacetat-Homopolymerisate, Vinylacetat-Copolymerisate mit Vinylestern von C₃- bis C₁₀-Alkylcarbonsäuren und einem Vinylacetat-Gehalt von 35 bis 90 Gew% enthalten sind, wobei die genannten Homo- oder Copolymerisate gegebenenfalls noch 0.05 bis 5.0 Gew.% N-Methylolacrylamid, N-Methylolmethacrylamid oder deren N-Alkoxymethyl-Derivate wie N-(isobutoxymethyl)(meth)acryl-amid oder N-(n-butoxymethyl)-(meth)acrylamid enthalten.

3. Holzleimpulver nach Anspruch 1 oder 2, dadurch gekennzeichnet, daß als Polymerisat b) Vinylalkohol-Homopolymerisate oder Vinylalkohol-Copolymerisate mit 0.5 bis 10 Gew.% 1-Methylvinylalkohol-Einheiten enthalten sind, deren Hydrolysegrad jeweils von 98 bis 100 Mol% und deren Höppler-Viskosität jeweils von 2 bis 10 mPa·s beträgt.

4. Verfahren zur Herstellung der Holzleimpulver nach Anspruch 1 bis 3, dadurch gekennzeichnet, daß das Vinylesterpolymerisat a) als wäßrige Dispersion mit einem Festgehalt von 30 bis 60 Gew.% eingesetzt wird, und dieser Dispersion das Vinylalkoholpolymerisats b) als Feststoff oder als wäßrige Lösung, mit einem Festgehalt der Lösung von bis zu 20 Gew.%, in beliebiger Reihenfolge, zugemischt wird, und diese Mischung anschließend sprühgetrocknet wird, wobei vor, während und nach dem Trocknen noch weitere Additive oder Hilfsstoffe zugegeben werden können.

5. Verwendung von Holzleimpulvern gemäß einem der obengenannten Ansprüche als vollkonfektioniertes Holzleimpulver, welches vor der Applikation mit Wasser angerührt wird.

6. Verwendung nach Anspruch 5, dadurch gekennzeichnet, daß das Holzleimpulver in Wasser redispergiert wird, wobei eine Brookfield-Viskosität (20 Upm) von 10000 bis 50000 mPa·s eingestellt wird.

7. Verwendung nach Anspruch 5 oder 6, dadurch gekennzeichnet, daß das Holzleimpulver in einer solchen Menge in Wasser redispergiert wird, daß eine wäßrige Klebemittel-Dispersion mit einem Festgehalt von 45 bis 55 Gew.% erhalten wird.

8. Verwendung nach Anspruch 5 bis 7, dadurch gekennzeichnet, daß die das Holzleimpulver enthaltende Klebemittel-Dispersion zur Verklebung von nichttragenden Holzbauteilen oder zur Verklebung von Holz mit saugfähigen Substraten verwendet wird.

9. Verwendung nach Anspruch 8, dadurch gekennzeichnet, daß die das Holzleimpulver enthaltende Klebemittel-Dispersion zur Parkettverklebung verwendet wird.

10. Wäßrige Klebemittel-Dispersion enthaltend ein in Wasser dispergiertes Holzleimpulver nach Anspruch 1 bis 4.

## Claims

1. Water-redispersible, blocking-stable wood glue powder having a minimum film-forming temperature of from 0 to 5°C, comprising
a) from 70 to 90% by weight of one or more vinyl ester homopolymers or vinyl ester copolymers of vinyl esters of unbranched or branched alkylcarboxylic acids having 1 to 18 carbon atoms, and
b) from 10 to 30% by weight of one or more fully hydrolyzed vinyl alcohol homopolymers or vinyl alcohol copolymers having a degree of hydrolysis of from 96 to 100 mol% and a Höppler viscosity of from 2 to 15 mPa.s, measured in 4% strength aqueous solution, based in each case on the overall weight of the polymeric constituents a) and b),
obtainable by mixing aqueous dispersions, prepared by the emulsion polymerization technique, of the vinyl ester polymers a) with the vinyl alcohol polymers b) and, if desired, with further additives and then by spray drying the mixture.

2. Wood glue powder according to Claim 1, characterized in that the polymer a) comprises vinyl acetate homopolymers, vinyl acetate copolymers with vinyl esters of C₃- to C₁₀-alkylcarboxylic acids and a vinyl acetate content of from 35 to 90% by weight, these homo- or copolymers also containing, if desired, from 0.05 to 5.0% by weight of N-methylolacrylamide, N-methylolmethacrylamide or the N-alkoxymethyl derivatives thereof, such as N-(isobutoxymethyl) (meth)acrylamide or N-(n-butoxymethyl) (meth)acrylamide.

3. Wood glue powder according to Claim 1 or 2, characterized in that the polymer b) comprises vinyl alcohol homopolymers or vinyl alcohol copolymers having from 0.5 to 10% by weight of 1-methylvinyl alcohol units, whose degree of hydrolysis in each case is from 98 to 100 mol% and whose Höppler viscosity in each case is from 2 to 10 mPa·s.

4. Process for preparing a wood glue powder according to Claim 1 to 3, characterized in that the vinyl ester polymer a) is employed as an aqueous dispersion having a solids content of 30 to 60% by weight, and to this dispersion is admixed the vinyl alcohol polymer b) in the form of a solid or of an aqueous solution, with a solids content of the solution of up to 20% by weight, in any desired sequence, and this mixture is subsequently spray-dried, it being possible for other additives or auxiliaries to be added prior to, during and after drying.

5. Use of a wood glue powder according to any of the abovementioned Claims as fully formulated wood glue powder which is stirred together with water prior to application.

6. Use according to Claim 5, characterized in that the wood glue powder is redispersed in water, a Brookfield viscosity (20 rpm) of from 10,000 to 50,000 mPa·s being established.

7. Use according to Claim 5 or 6, characterized in that the wood glue powder is redispersed, in water, in a quantity such that an aqueous adhesive dispersion having a solids content of from 45 to 55% by weight is obtained.

8. Use according to Claim 5 to 7, characterized in that the adhesive dispersion comprising the wood glue powder is used for bonding non-load-bearing wood components or for bonding wood to absorbent substrates.

9. Use according to Claim 8, characterized in that the adhesive dispersion comprising the wood glue powder is used for parquet bonding.

10. Aqueous adhesive dispersion comprising a water-dispersed wood glue powder according to Claim 1 to 4.

## Revendications

1. Poudre de colle à bois redispersable dans l'eau et stable vis-à-vis du blocage, ayant une température minimale de formation de film de 0 à 5°C, contenant
a) de 70 à 90% en poids d'un ou de plusieurs homopolymères d'ester vinylique ou copolymères d'esters vinyliques d'acides carboxyliques non ramifiés ou ramifiés ayant de 1 à 18 atomes de carbone, et
b) de 10 à 30% d'un ou de plusieurs homopolymères d'alcool vinylique ou copolymères d'alcool vinylique totalement saponifiés ayant un degré d'hydrolyse de 96 à 100% en moles et une viscosité Höppler de 2 à 15 mPa.s, mesurée dans une solution aqueuse à 4%, à chaque fois par rapport au poids total des composants polymères a) et b),
pouvant être obtenue en mélangeant des dispersions aqueuses, préparées d'après le procédé de polymérisation en émulsion, des polymères d'ester vinylique a) avec les polymères d'alcool vinylique b) et éventuellement des additifs supplémentaires, et ensuite en séchant le mélange par pulvérisation.

2. Poudre de colle à bois selon la revendication 1, caractérisée en ce que le polymère a) comprend des homopolymères d'acétate de vinyle, des copolymères d'acétate de vinyle avec des esters vinyliques d'acides alkylcarboxyliques en C₃ à C₁₀ et une teneur en acétate de vinyle de 35 à 90% en poids, lesdits homopolymères ou copolymères contenant éventuellement également de 0,05 à 5,0% en poids de N-méthylolacrylamide, de N-méthylolméthacrylamide ou de leurs dérivés N-alcoxyméthylés, tels que le N-(isobutoxyméthyl)(méth)acrylamide ou le N-(n-butoxyméthyl) (méth)acrylamide.

3. Poudre de colle à bois selon la revendication 1 ou 2, caractérisée en ce que le polymère b) comprend des homopolymères d'alcool vinylique ou des copolymères d'alcool vinylique ayant de 0,5 à 10% en poids de motifs alcool 1-méthylvinylique, dont le degré d'hydrolyse est à chaque fois de 98 à 100% en moles et dont la viscosité Höppler est à chaque fois de 2 à 10 mPa.s.

4. Procédé de préparation de la poudre de colle à bois selon les revendications 1 à 3, caractérisé en ce que l'on utilise le polymère d'ester vinylique a) sous forme de dispersion aqueuse avec une teneur en matières solides de 30 à 60% en poids, et que l'on mélange à cette dispersion, dans un ordre quelconque, le polymère d'alcool vinylique b) sous forme de solide ou sous forme de solution aqueuse, la teneur en matières solides de la solution allant jusqu'à 20% en poids, et que l'on sèche ensuite ce mélange par pulvérisation, des additifs ou auxiliaires supplémentaires pouvant encore être ajoutés avant, pendant et après le séchage.

5. Utilisation de poudres de colle à bois selon l'une quelconque des revendications précédentes, en tant que poudre de colle à bois entièrement formulée qui est agitée avec de l'eau avant l'application.

6. Utilisation selon la revendication 5, caractérisée en ce que la poudre de colle à bois est redispersée dans l'eau, une viscosité Brookfield (20 tours/ min) de 10 000 à 50 000 mPa.s étant établie.

7. Utilisation selon la revendication 5 ou 6, caractérisée en ce que la poudre de colle à bois est redispersée dans l'eau en une quantité telle que l'on obtienne une dispersion d'adhésif aqueuse ayant une teneur en matières solides de 45 à 55% en poids.

8. Utilisation selon les revendications 5 à 7, caractérisée en ce que la dispersion d'adhésifs contenant la poudre de colle à bois est utilisée pour coller des composants en bois ne supportant pas de charge ou pour coller du bois à des substrats absorbants.

9. Utilisation selon la revendication 8, caractérisée en ce que la dispersion d'adhésifs contenant la poudre de colle à bois est utilisée pour coller du parquet.

10. Dispersion d'adhésifs aqueuse contenant une poudre de colle à bois dispersée dans l'eau selon la revendication 1 à 4.
